(19) **Europäisches Patentamt / European Patent Office / Office européen des brevets**

(11) **EP 1 668 397 B1**

(12) **EUROPEAN PATENT SPECIFICATION**

(45) Date of publication and mention
of the grant of the patent:
**02.05.2007 Bulletin 2007/18**

(21) Application number: **04744510.1**

(22) Date of filing: **07.07.2004**

(51) Int Cl.:
*G02B 26/08* (2006.01)     *G02B 26/10* (2006.01)

(86) International application number:
**PCT/IB2004/051149**

(87) International publication number:
**WO 2005/006052 (20.01.2005 Gazette 2005/03)**

(54) **LASER BEAM SCANNER**

LASERSTRAHLABTASTER

DISPOSITIF DE BALAYAGE PAR FAISCEAUX LASER

(84) Designated Contracting States:
**AT BE BG CH CY CZ DE DK EE ES FI FR GB GR HU IE IT LI LU MC NL PL PT RO SE SI SK TR**

(30) Priority: **14.07.2003 EP 03102137**

(43) Date of publication of application:
**14.06.2006 Bulletin 2006/24**

(73) Proprietor: **Koninklijke Philips Electronics N.V.
5621 BA Eindhoven (NL)**

(72) Inventors:
• **WILLEMSEN, Oscar, H.**
**NL-5656 AA Eindhoven (NL)**
• **HOLTSLAG, Antonius, H., M.**
**NL-5656 AA Eindhoven (NL)**
• **IJZERMAN, Willem, L.**
**NL-5656 AA Eindhoven (NL)**
• **DE ZWART, Siebe, T.**
**NL-5656 AA Eindhoven (NL)**

(74) Representative: **Rolfes, Johannes Gerardus Albertus
Philips
Intellectual Property & Standards
P.O. Box 220
5600 AE Eindhoven (NL)**

(56) References cited:
**US-A- 5 579 148          US-B1- 6 201 629
US-B1- 6 449 079**

## Description

The present invention relates to a two dimensional scanning device, for use in a projecting display, comprising a surface suspended by at least two torsion elements defining a torsion axis, and a first actuator for pivoting said surface around said torsion axis.

It has recently been proposed to provide small handheld electronic devices, such as mobile phones or PDA's with image projectors. The ability to display information on a much larger area than the present displays will pave the way for activities as watching real time videos, gaming and sharing images.

Such a projection display device must be compact, low cost, light-weight, low power and robust. For displaying video information, the refresh rate of the image should be higher than or equal to 50 Hz. The line frequency is dependent on the image rate, the number of lines displayed and whether the image is scanned progressively or interlaced. A rough estimate of the frequency needed in such a scanner is 16 kHz.

The concept of a video display based on laser scanning is well known in the art, and typically comprises a laser diode and two individual scanning mirrors, one of which normally is a rotating polygon mirror. This concept has the disadvantage that severe raster distortions are caused as deflection point for the horizontal and vertical direction are not positioned at the same point. Unlike the raster distortions that occur in a CRT, such distortions do not have a quadrant symmetry, and hence are more difficult to correct electronically. There are also a number of practical problems. The scanning mirrors have a reflective area of approximately $5*5 \text{ mm}^2$, making them too bulky to use in a small handheld electronic device. In addition, the mirror for the fast scan direction has to be driven above its resonant frequency, which will result in a excessive input power for the scanner.

Examples of alternative scanners intended to overcome these problems are torsion scanners (see e.g. US 5,629,790) and cantilever scanners (see e.g. EP 875 780). A torsion scanner comprises a mirror suspended by two torsion bars (springs) over a recess in a base. When actuated, the mirror will pivot around the axis of the torsion bars. A cantilever scanner comprises a mirror on a cantilever beam, attached to the base in one of its short ends. When actuated, the cantilever beam will bend, and its free end will thus rotate around an axis perpendicular to its lengthwise extension. In both cases, an actuator is arranged to cause the mirror and its mechanical mount to oscillate at resonance frequency. The actuator can for example be electrostatic, providing a voltage difference between the mirror and the base, a bimorph actuator, or a piezoelectric actuator.

By combining two torsion scanners, a two-dimensional scanner can be obtained, as is shown in US 5,629,790. A two dimensional torsion scanner with a electrostatic actuator is disclosed in the US patent application 2001/0022682.

These proposed scanners have a relatively large reflecting surface and thus a large mass. By combining the large mass with stiff torsion bars or cantilevers, the resonant frequency of the mirror in the fast scan direction can meet the requirements for video applications. However, a stiff cantilever or torsion bar implicates that the optical scan angle of the mirror is typically in the order of five degrees, which is too small for use in a projecting display operated at close distance. Moreover, the scanners are operated in vacuum to avoid air damping, thus requiring a costly packaging step. By instead using weaker torsion bars or cantilevers, the optical scan angle can be enlarged, but this is accompanied by a resonant frequency that is too low for scanning the beam at an image rate suitable for video applications.

US 6 201 629 discloses a two dimensional scanning device according to the preamble of claim 1.

An object of the present invention is to overcome the mentioned problems, and to provide an improved two dimensional scanning device, suitable for a projecting display.

According to the invention, these and other objects are achieved by a scanning device of the kind mentioned by way of introduction, further comprising a cantilever beam having one end fixed in relation to said surface and an opposite end arranged to bend around an axis non-parallel to said torsion axis, a reflective surface provided on said cantilever beam, and a second actuator for bringing said cantilever beam to oscillate at its resonance frequency.

The surface and the first actuator form a torsion scanner, operating in a first frequency range which may include, but by no means is restricted to, the resonance frequency of the torsion scanner. On its surface, this scanner then carries a second scanner, of the cantilever type, which is arranged to oscillate at its resonance frequency, significantly faster than the frequency of the first scanner. As the reflecting surface of the second scanner can be pivoted or rotated around two different axis, it can be used as a two dimensional scanner.

The combination of a slow torsion scanner and a faster cantilever scanner provides a two dimensional scanner capable of scanning a laser beam in a raster pattern to project an image.

Preferably, the cantilever beam has such mass and such dimensions that its resonance frequency is in the range of 10 kHz - 100 kHz, and preferably in the range 15kHz - 35kHz. This is a suitable frequency range for video projecting implementations. In practice, this can be achieved by having a reflecting surface with dimensions in the order of $100\mu m$ by $100\mu m$ provided on a cantilever beam made of Silicon or Silicon nitride. Further, the cantilever preferably has such a thickness so as to allow a bending range of at least 10 degrees, and preferably more than 25 degrees, thereby providing an optical scan angle of twice this range, i.e. preferably more than 50 degrees.

According to one embodiment of the invention, the cantilever beam has two legs, each being fixed in relation to the surface, and wherein said reflective surface extends to unite the two legs. In this design, the reflective area is more rigid to bending than the arms. Thus the bending area is more or less separated from the reflective area. Further, the cantilever is made more rigid in the torsion direction (i.e. rotation along the length axis). Thus the bending of the lever is less disturbed by beam displacement due to torsion. The shape of the reflective area is preferably rectangular, causing the aperture shape factor to be smaller, thereby reducing the angular spread in the reflected beam.

Preferably, the cantilever beam and the surface of the torsion scanner are formed from one substrate, the cantilever beam extending from one side of an opening in the surface. This design obviates the need for alignment of two separate scanning devices. The surface and torsion bars of the torsion scanner can be formed by etching a substrate of silicon or silicon nitride.

The second actuator can be a piezo-electric actuator. It can be arranged directly on the pivoting surface, or separated from this surface. The mechanical excitation from the piezo-electric actuator will cause the cantilever to oscillate.

The first actuator may be of various types, for example a galvanic actuator or an electrostatic actuator. Alternatively, the first actuator may comprise [claim 8]. Such an actuator is in itself new to the art, and may be advantageously implemented in various types of torsion scanners, including other types than the ones described in the present application.

According to a second aspect of the invention, the above objects are achieved by a projecting device, comprising a scanning device according to the above.

These and other aspects of the present invention will now be described in more detail, with reference to the appended drawings showing currently preferred embodiments of the invention.

Fig 1 is a schematic view of a projecting device advantageously implementing a scanning device according to the present invention.
Fig 2 is a perspective view of a cantilever scanner according to a first embodiment of the invention.
Fig 3a and 3b are top views of cantilever scanners according to a second and third embodiment of the invention, respectively.
Fig 4 is a section view of a scanning device according to a first embodiment of the invention.
Fig 5 is a top view of a scanning device according to a second embodiment of the invention.

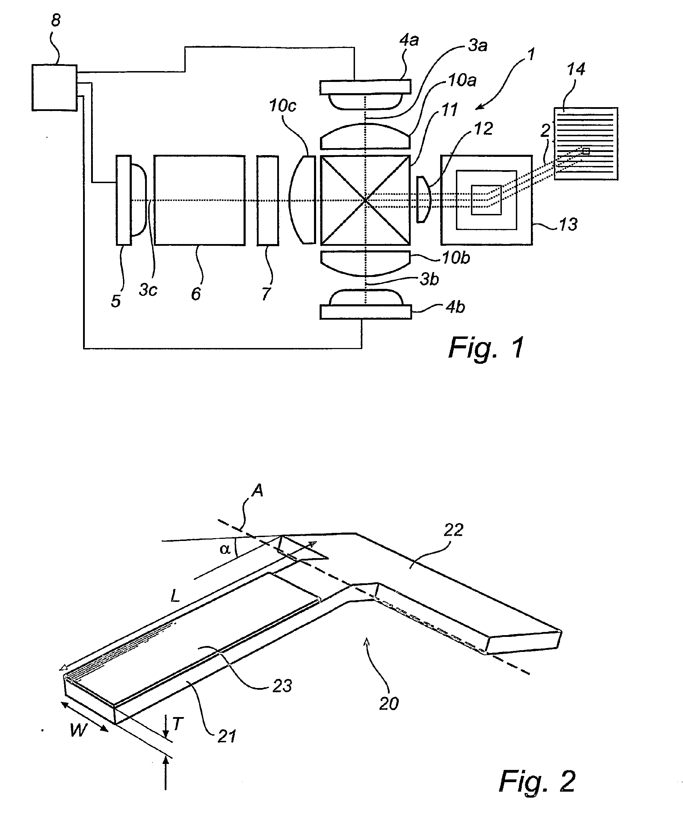

In fig 1, a projecting device 1 implementing a scanner according to the invention is illustrated schematically. The device is capable of projecting a laser beam 2 on a surface such as a wall (not shown), and the dimensions of the device are such that it can be used in a mobile application, e.g. a mobile phone or a PDA. Typically this means in the order of 10 mm by 10 mm.

In the illustrated projecting device 1, a desired color is obtained by combining red, blue and green laser beams 3a, 3b, 3c with a ratio defined by a video signal. The combined laser beam 2 is then directed towards a scanning device 13, and scanned over a screen 14 to obtain a color image.

The red and blue colored laser beams are preferably created by laser diodes 4a, 4b, emitting light in the red and blue wavelength area, respectively. While red and blue lasers diodes are presently commercially available, green laser diodes are presently not (although they are expected to be in the future). In the illustrated projector, green light is therefore created by a diode pump 5 feeding infrared light to a crystal 6 that converts two photons of infrared to one photon of green light. Another option (not shown) is to use an up-conversion fiber that acts as a laser when it is pumped with a UV laser diode. Yet another option is to use an optically pumped semiconductor laser (OPSL) for generation of the green (and blue) light. If the green light cannot be modulated at the video frequency by modulating the diode pump 5, a light modulator 7 can be included in the optical path of the green beam.

A driver 8 is arranged to receive video signal containing video information, and to modulate the laser beams 3a, 3b, 3c in accordance with this information. The device further comprises a set of lenses 10a, 10b, 10c, arranged around a dichroic mirror 11, and a further lens 12, arranged between the dichroic mirror and a scanning device 13 according to the invention. The dichroic mirror 11 can be a dichroic cube of a kind well-known from LCD projectors, and is advantageously quite small and thus cheap.

By passing the lenses 10a, 10b, 10c, 12 and the dichroic mirror 11, the laser beams 3a, 3b, 3c are combined and collimated to a parallel beam 2 that fits onto the scanning device 13. For instance, light from the red laser diode 4a is focused by a first lens 10a, after which it is combined in the dichroic mirror 11 and collimated with a small lens 12. The detail of the lenses, their mutual distances and their strengths can be determined by the person skilled in the art.

In order to operate in two dimensions, the scanning device 13 comprises two one-dimensional scanners; a first, slow scanner, provided with a second, fast scanner. The first scanner is a torsion scanner, and comprises a plate-shaped area suspended from the surrounding material by two bars or springs. By actuating the plate using suitable actuator, the plate can be brought to pivot around the axis defined by the bars. The second scanner is a cantilever scanner, and comprises a cantilever beam provided with a mirroring surface attached in one end to a substrate. By actuating the beam using a suitable actuator, the beam will bend around an axis perpendicular to its lengthwise extension, and can be brought to oscillate at its resonance frequency. It is important that the vibration direction of the cantilever scanner is different from the rotation direction of the torsion scanner, in order to provide a two dimensional scanner. Preferably, when implementing a raster type scanning pattern, the vibration direction of the cantilever scanner is exactly orthogonal to the rotation direction of the torsion scanner and the mirroring area of the cantilever scanner is located exactly on the rotation axis of the torsion scanner. To minimize the packaging costs of the scanner, all embodiments are most preferably operated in air. The scanning device 13 according to the invention will be described more in detail in the following.

The cantilever scanner will be described first, with reference to figures 2-3. In its most simple form, showed in fig 2, a cantilever 20 is shaped as a rectangular beam 21 with thickness T, width W and length L, protruding from a base 22. The resonance frequency ($f$) of a freely oscillating beam cantilever is given by:

$$f = 0.162 \cdot \sqrt{\frac{E}{\rho}} \cdot \frac{T}{L^2},$$

where T is the thickness, L is the length, E is the Young's modulus and $\rho$ is the density of the cantilever. Note that the width of the cantilever does not affect the resonance frequency.

The cantilever can be bent in the lengthwise direction around an axis A, and the dimensions and material of the cantilever are chosen to allow for a bending angle $\alpha$ sufficient for the intended application. Preferably, the maximum bending angle $\alpha$ is around 30 degrees, which provides a scanning angle of 60 degrees (incident angle will be up to 30 degrees). This will provide a sufficient resolution, even for a small reflective surface.

The most preferred size of the cantilever depends on the resonant frequency that is required for the application. If we, for simplicity, assume a cantilever as a homogeneous piece of silicon nitride with a thickness of 600 nm, we can calculate that a length of 241 $\mu$m corresponds to a resonance frequency of 16 kHz. The width of the cantilever can be chosen with less restrictions since it does not affect the resonant frequency.

To increase the reflection coefficient of the lever, a part of it can be coated with a reflective material 23, such as gold or aluminum. In practice an aluminum layer of 50 nm on a silicon nitride layer of 500 nm will be adequate. The reflective area of the cantilever can be made more rigid by adding more silicon nitride to the lower side of the reflective area.

The cantilever can be excited in a number of ways, to bring the cantilever to oscillate at resonance frequency. The excitation can be accomplished mechanically, e.g. by a piezo-electric crystal. The crystal can be integrated with the substrate on which the cantilever is formed, but may in principle be located further away, as long as the oscillation waves can reach the cantilever beam. By driving the piezo element at the resonant frequency of the cantilever, only the fundamental bending mode of the cantilever is excited and will oscillate with a large amplitude. Alternatively, a thin piezo resistive layer can be coated on the cantilever beam, and a voltage be applied to this layer, thus inducing a bending of the beam. Another closely related option is to deposit a layer with a different thermal expansion coefficient than that of the cantilever. By heating the layer with a current, bending of the cantilever is induced.

Non-mechanical excitation can be accomplished by providing a magnetic layer on the backside of the cantilever and by driving a closely positioned coil at the resonant frequency. Care should naturally be taken that the layer is very thin, such that the shift in the resonant frequency of the cantilever, due to the added mass, is small. Since the scanner can be operated in air, acoustic excitation of the cantilever beam can also be envisaged. In this case (ultra-)sound is generated by a speaker and is transmitted to the scanner via the air.

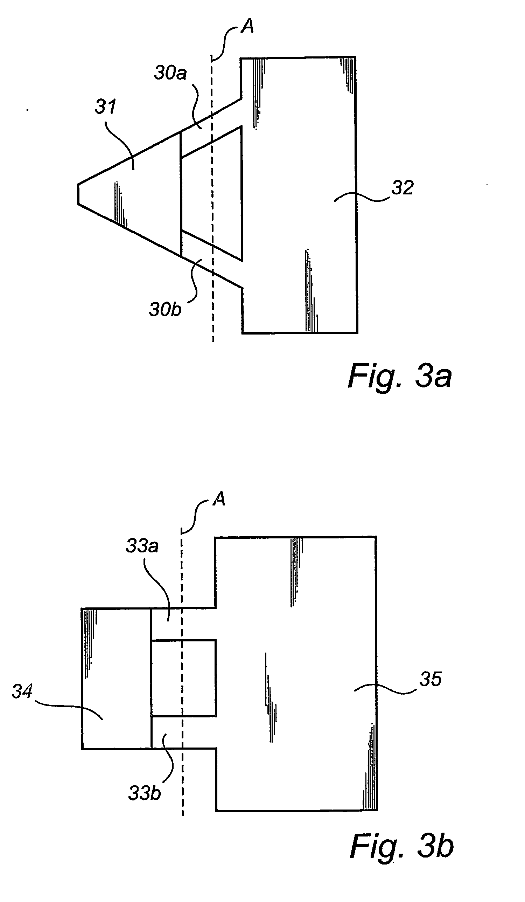

According to a further embodiment of the cantilever beam, shown in figures 3a and 3b, it comprises two legs 30a, 30b, 33a, 33b connecting the reflecting area 31, 34 with the base 32, 35. The cantilever in fig 3a is V-shaped, having the reflective area 31 located at the intersection of the two legs 30a, 30b. The cantilever in fig 3b has a rectangular reflective area 34 and two essentially parallel legs 33a, 33b.

It is more difficult to find an equation for the resonance frequency of the lever for the embodiments in figs 3a and 3b. However, if the cantilever in fig 3b is considered as two separated levers with identical resonance frequency that are interconnected, the mass of the interconnection should reduce the resonance frequency. Hence, for a given resonance frequency, the length of a cantilever in fig 3a and 3b will be smaller than that of the cantilever in fig 2.

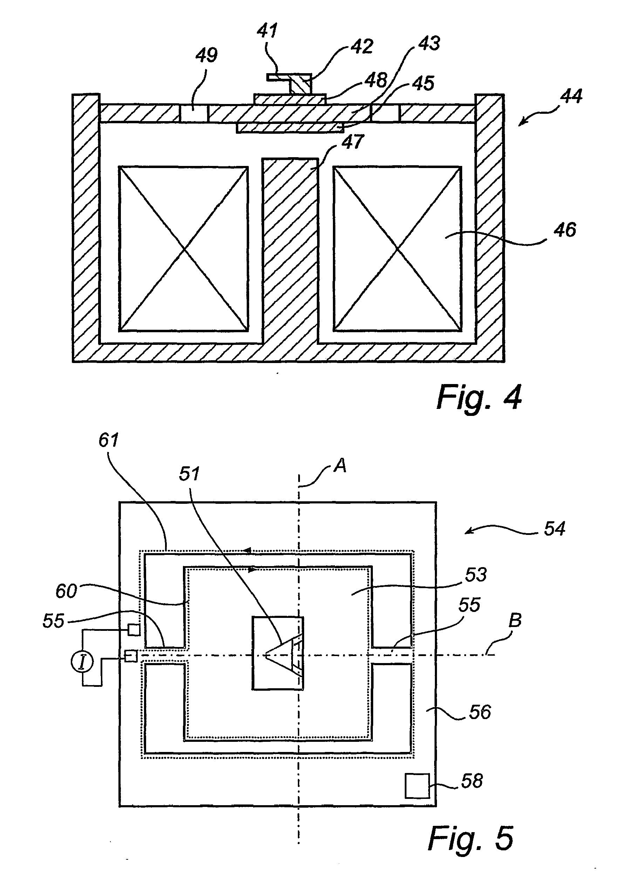

In a first embodiment of the two dimensional scanner 13 according to the invention, shown in fig 4, a cantilever scanner 41 as described above is attached by a supporting structure 42 on the pivoting plate 43 of a conventional galvanically driven torsion scanner 44. The pivoting plate 43 is suspended by torsion bars 49, and provided with a permanent magnet 45, and an electromagnetic field is induced by applying a current to a coil 46 arranged around a core 47. When the induced field interacts with the magnet 45, a force is generated, and the plate 43 pivots.

Other torsion scanners are also possible, including electrostatically driven scanners, where electrodes are provided on the plate and on the base. By applying voltages to the electrodes, attracting or repelling forces can be generated, causing the plate to pivot.

As mentioned above, the cantilever scanner 41 is excited to oscillate at resonance frequency by e.g. a piezo element 48. For most efficient excitation, the piezo element 48 should preferably be positioned directly below the supporting structure 42 of the cantilever 41. The structure should be fixed very tight on the piezo element for optimal excitation.

The combination of cantilever 41 and piezo element 48 is so small that it can be attached to the pivoting plate 43 of the torsion scanner without affecting the resonant frequency of this scanner significantly. Therefore, only small adaptations in the driving circuitry of this scanner are necessary.

In a second embodiment of the two dimensional scanner 13 according to the invention, shown in fig 5, the cantilever beam 51, here if the type shown in fig 3a, is formed in the pivoting plate 53 of the torsion scanner 54 itself, and arranged to have its bending axis A perpendicular to the torsion axis B of the torsion bars 55. Preferably, the cantilever beam 51 and the torsion bars 55 are formed by etching a substrate 56 of silicon or silicon nitride.

The dimensions of the plate, including the cantilever support and the cantilever, are chosen such that the resonance frequency is considerably higher than the intended plate frequency. In this way it is possible to drive the slow scan direction with a sawtooth-shaped signal without any feedback. In addition, extra signals can be applied to compensate for non-linearity effects in the plate scanning direction.

The main advantage of the scanner in fig 5 over the scanner in fig 4 is that the scanners for both directions are fully integrated, thus eliminating the need of alignment.

As mentioned above, the cantilever 51 is brought to oscillate at resonance frequency by an excitation means. If a piezo element 58 is used to excite the cantilever, it can be positioned on the substrate 56, outside the plate 53.

The plate 53 of the torsion scanner can be driven in a number of ways, including those mentioned above in relation to the first embodiment. A further approach for driving the torsion scanner, new to the art, is based on the Lorentz force.

An actuator adapted for such drive comprises two conducting paths, preferably formed by metal deposited on the substrate. A first path 60 extends around the periphery of the plate 53, and a second path 61 extends along the inner border of the surrounding substrate 56. By applying currents to the two paths, an attractive or repelling force is generated between the coils, causing the plate to pivot. Note that the two coils must be slightly separated in the z-level, as the force between the conductors will otherwise not generate any torque. This can be accomplished by etching trenches before the deposition of (one of) the paths, or by depositing one path on one side of the substrate, and the other path on the other side of the substrate.

In fig 5, the two paths 60, 61 are integrated into one pattern, only requiring one current supply 62. Naturally, other patterns are possible, and the two paths can also be separate. Further, applying more windings to each path will lower the driving current at the expense of the driving voltage.

All embodiments for the two dimensional beam scanner according to the invention have in common that the fast scanner (the cantilever) is driven at resonance. This implies that the input power that is needed to excite the movement is negligible when compared to the power that is needed to generate light. Also the power for the slow scan direction can be quite small. Even for the quite bulky galvanic torsion scanner in fig 4, the power is substantially below 100mW. Hence, the input power of the complete device will probably be sufficiently small for mobile applications.

**Claims**

1. A two dimensional scanning device, for use in a projecting display, comprising a surface (43; 53) suspended by at least two torsion elements (49; 55) defining a torsion axis (B), and a first actuator (45, 46, 47; 60, 61) for pivoting said surface (43; 53) around said torsion axis (B), **characterized by**

   - a cantilever beam (41; 51) having one end fixed in relation to said surface and an opposite end arranged to bend around a bending axis (A) non-parallel to said torsion axis (B),
   - a reflective surface (31; 34) provided on said cantilever beam (41; 51), and
   - a second actuator (48; 58) for bringing said cantilever beam to oscillate at its resonance frequency.

2. A scanning device according to claim 1, wherein said cantilever beam (41; 51) has such mass and such dimensions that its resonance frequency is in the range of 10 kHz-100 kHz, and preferably in the range 15kHz - 35kHz.

3. A scanning device according to claim 1, wherein said cantilever beam (41; 51) has such dimensions that it is bendable around the bending axis (A) in a range of at least 15 degrees, and preferably more than 50 degrees.

4. A scanning device according to claim 1, wherein said cantilever beam has two legs (30a, 30b; 33a, 33b), each being fixed in relation to the surface (43; 53), and wherein said reflective surface (31; 34) extends to unite the two legs (30a, 30b; 33a, 33b).

5. A scanning device according to claim 1, wherein said cantilever beam (51) and said surface (53) are formed from one substrate, said cantilever beam (51) extending from one side of an opening in said surface (53).

6. A scanning device according to claim 1, wherein said surface (53) and said torsion bars (55) are formed by etching a substrate of silicon or silicon nitride.

7. A scanning device according to claim 1, wherein said second actuator is a piezo-electric actuator (48).

8. A scanning device according to claim 1, wherein said first actuator is a galvanic actuator, comprising an electromagnet.

9. A scanning device according to claim 1-5, wherein said first actuating means comprises two electrically conducting coils.

10. A projecting device (1), including a scanning device (13) according to claim 1.

11. A projecting device according to claim 10, further comprising:

> - means (4a, 4b, 5, 6) for generating a plurality of laser beams (3a, 3b, 3c),
> - a driver (8) for modulating said laser beams, and
> - means (10a, 10b, 10c, 11, 12) for collimating and combining said beams, and directing the combined beam (2) onto said scanner (13).

**Patentansprüche**

1. Zweidimensionale Scanningvorrichtung zur Verwendung in einer Projektionsvorrichtung, mit einer Fläche (43; 53), die an mindestens zwei Torsionselementen (49; 55) aufgehängt ist, welche eine Torsionsachse (B) festlegen, und mit einem ersten Aktor (45, 46, 47; 60, 61) für das Schwenken der Fläche (43; 53) um die Torsionsachse (B) herum, **gekennzeichnet durch**

> - einen Auslegerarm (41; 51), der ein bezüglich der Fläche befestigtes Ende und ein gegenüberliegendes Ende aufweist, das eingerichtet ist, sich um eine Achse (A) zu biegen, die nicht parallel zu der Torsionsachse (B) ist;
> - eine Reflexionsfläche (31; 34), die auf dem Auslegerarm (41; 51) vorgesehen ist, und
> - einen zweiten Aktor (48; 58), um den Auslegerarm dazu zu bringen, bei seiner Resonanzfrequenz zu schwingen.

2. Scanningvorrichtung nach Anspruch 1, wobei der Auslegerarm (41; 51) eine derartige Masse und derartige Abmessungen aufweist, dass seine Resonanzfrequenz im Bereich von 10 kHz - 100 kHz und vorzugsweise im Bereich von 15 kHz - 35 kHz liegt.

3. Scanningvorrichtung nach Anspruch 1, wobei der Auslegerarm (41; 51) derartige Abmessungen aufweist, dass er um die Biegeachse (A) in einem Bereich von mindestens 15 Grad und vorzugsweise mehr als 50 Grad verbiegbar ist.

4. Scanningvorrichtung nach Anspruch 1, wobei der Auslegerarm zwei Schenkel (30a, 30b; 33a, 33b) aufweist, von denen jeder bezüglich der Fläche (43; 53) fixiert ist, und wobei sich die Reflexionsfläche (31; 34) so erstreckt, dass sie die zwei Schenkel (30a, 30b; 33a, 33b) verbindet.

5. Scanningvorrichtung nach Anspruch 1, wobei der Auslegerarm (51) und die Fläche (53) aus einem Substrat ausgebildet sind, wobei sich der Auslegerarm (51) von der einen Seite einer Öffnung in der Fläche (53) erstreckt.

6. Scanningvorrichtung nach Anspruch 1, wobei die Oberfläche (53) und die Torsionsstifte (55) durch Ätzen eines Substrats aus Silizium oder Siliziumnitrid ausgebildet sind.

7. Scanningvorrichtung nach Anspruch 1, wobei der zweite Aktor ein piezoelektrischer Aktor (48) ist.

8. Scanningvorrichtung nach Anspruch 1, wobei der erste Aktor ein galvanischer Aktor ist, der einen Elektromagneten umfasst.

9. Scanningvorrichtung nach Anspruch 1-5, wobei das erste Ansteuerungsmittel zwei elektrisch leitende Spulen umfasst.

10. Projektionsvorrichtung (1) einschließlich einer Scanningvorrichtung (13) nach Anspruch 1.

11. Projektionsvorrichtung nach Anspruch 10, ferner umfassend:

> - Mittel (4a, 4b, 5, 6) zum Erzeugen einer Anzahl von Laserstrahlen (3a, 3b, 3c),
> - einen Treiber (8) zum Modulieren der Laserstrahlen und
> - Mittel (10a, 10b, 10c, 11, 12) zum Kollimieren und Vereinigen der Strahlen sowie zum Ausrichten des vereinigten Strahls (2) auf den Scanner (13).

**Revendications**

1. Dispositif de balayage bidimensionnel pour être utilisé dans un dispositif d'affichage de projection comprenant une surface (43, 53) qui est suspendue par au moins deux éléments de torsion (49; 55) définissant un axe de torsion (B) et un premier actionneur (45, 46, 47; 60, 61) pour faire pivoter ladite surface (43, 53) autour dudit axe de torsion (B),

**caractérisé par**

- une poutre en porte-à-faux (41; 51) ayant une extrémité qui est fixée par rapport à ladite surface et une extrémité opposée qui est agencée de manière à se plier autour d'un axe de courbure (A) qui est non parallèle audit axe de torsion (B),
- une surface réfléchissante (31; 34) qui est prévue sur ladite poutre en porte-à-faux (41; 51), et
- un deuxième actionneur (48; 58) pour effectuer que ladite poutre en porte-à-faux oscille à sa fréquence de résonance.

2. Dispositif de balayage selon la revendication 1, dans lequel ladite poutre en porte-à-faux (41; 51) présente une telle masse et de telles dimensions de façon que sa fréquence de résonance se situe dans la gamme comprise entre 10 kHz et 100 kHz et de préférence dans la gamme comprise entre 15 kHz et 35 kHz.

3. Dispositif de balayage selon la revendication 1, dans lequel ladite poutre en porte-à-faux (41; 51) présente de telles dimensions qu'elle est pliable autour de l'axe de courbure (A) dans une gamme d'au moins 15 degrés et de préférence plus de 50 degrés.

4. Dispositif de balayage selon la revendication 1, dans lequel ladite poutre en porte-à-faux présente deux jambes (30a, 30b; 33a, 33b), chacune étant fixée par rapport à la surface (43; 53) et dans lequel ladite surface réfléchissante (31; 34) s'étend de manière à unir les deux jambes (30a, 30b; 33a, 33b).

5. Dispositif de balayage selon la revendication 1, dans lequel la poutre en porte-à-faux (51) et ladite surface (53) sont formées à partir d'un substrat, ladite poutre en porte-à-faux (51) s'étendant à partir d'un côté d'une ouverture dans ladite surface (53).

6. Dispositif de balayage selon la revendication 1, dans lequel ladite surface (53) et lesdites barres de torsion sont formées par décapage d'un substrat de silicium ou de nitrure de silicium.

7. Dispositif de balayage selon la revendication 1, dans lequel ledit deuxième actionneur est un actionneur piézoélectrique (48).

8. Dispositif de balayage selon la revendication 1, dans lequel ledit premier actionneur est un actionneur galvanique comprenant un électro-aimant.

9. Dispositif de balayage selon les revendications précédentes 1 à 5, dans lequel lesdits premiers moyens d'actionnement comprennent deux bobines électriquement conductrices.

10. Dispositif de projection (1) comprenant un dispositif de balayage (13) selon la revendication 1.

11. Dispositif de projection selon la revendication 10 comprenant encore:

- des moyens (4a, 4b, 5, 6) pour générer une pluralité de faisceaux laser (3a, 3b, 3c),
- un dispositif d'attaque (8) pour moduler lesdits faisceaux laser, et
- des moyens (10a, 10b, 10c, 11, 12) pour collimater et pour combiner lesdits faisceaux et pour orienter le faisceau combiné (2) sur ledit dispositif de balayage (13).

*Fig. 1*

*Fig. 2*

*A*

*30a*

*31*

*32*

*30b*

*Fig. 3a*

*A*

*33a*

*34*

*35*

*33b*

*Fig. 3b*

Fig. 4

Fig. 5